# EUROPÄISCHE PATENTSCHRIFT

(11) **EP 1 254 937 B1**
(45) Veröffentlichungstag und Bekanntmachung des Hinweises auf die Patenterteilung: **28.11.2007**
(21) Anmeldenummer: 02009080.9
(22) Anmeldetag: 24.04.2002
(51) Int. Cl.: C09J 7/02

(54) **Komponentenklebersystem**
Component adhesive system
Système adhésif à composants

(30) Priorität: 05.05.2001 DE 10121953
(43) Veröffentlichungstag der Anmeldung: 06.11.2002
(73) Patentinhaber: Switsak GmbH, 89584 Ehingen (DE)
(72) Erfinder: Mohr, Claus, 89584 Ehingen (DE)
(74) Vertreter: Kiessling, Christian

(56) Entgegenhaltungen:
- EP-B- 0 362 742
- DE-A- 2 158 411
- DE-A- 2 932 949
- DE-A- 3 008 218
- DE-A- 3 122 146
- GB-A- 1 037 989
- J. FALBE, M. REGITZ: "Römpp Chemie Lexikon, Band 5" 1992, GEORG THIEME VERLAG , STUTTGART; NEW YORK
- FALBE J.; REGITZ M.: "Römpp Chemie Lexikon, Band 5" 1992, GEORG THIEME VERLAG , STUTTGART; NEW YORK

## Beschreibung

Die Erfindung betrifft ein Komponentenklebersystem.

Trägerschichten für Komponentenkleber der eingangs genannten Art sind im Stand der Technik in einer Vielzahl unterschiedlichster Ausführungsformen bekannt und finden Verwendung, um ein einfaches schnelles Durchmischen der betreffenden Substrate zu erreichen. Die bekannten Trägerschichten weisen dabei jedoch den Nachteil auf, dass ihre physikalischen Eigenschaften und damit auch teilweise diejenigen des Klebeproduktes durch das jeweils gewählte Material vorgegeben sind, wobei bestimmte mögliche Variablen der physikalischen Eigenschaften nicht für eine mögliche gezielte Veränderung der Eigenschaften des Klebeproduktes genutzt werden.

Aus DE 21 58 411 A ist eine Klebebahn aus Filzgewebe und einem 2-Komponenten-Leim bekannt, wobei die Bahn mit einer eingebetteten Trockenkomponente des 2-Komponenten-Leimes trocken eingelegt ist und ein Mischprozess des 2-Komponenten-Leimes erst unmittelbar vor einem Zusammenpressen der Leimfuge durch Aufsprühen der flüssigen Komponente eingeleitet wird.

Aus DE 31 22 146 und DE 29 32 949 A ist eine Verwendung von Acrylaten zur Verfestigung einer Faserwirrlage bekannt.

Aus den Dokumenten EP 0 362 742 B und DE 30 08 218 A sind Zwei-Komponentenklebstoffe auf Basis von Aminoplasten bekannt.

Aufgabe der Erfindung ist es, ein Komponentenklebersystem mit einer Trägerschicht zu schaffen, die eine fest definierte Saugfähigkeit aufweist, um damit einen möglichst genau vorgebbaren Zeitraum für eine vollständige Benetzung der Trägerschicht zu schaffen.

Für ein Komponentenklebersystem umfassend eine feste Trägerschicht aus saugfähigem Material für einen Komponentenkleber mit mindestens einer ersten pulverförmigen Komponente, die in die Trägerschicht eingebracht ist, und einer zweiten flüssigen Komponente, wobei die erste Komponente bei Kontakt mit der zweiten flüssigen Komponente ein Aushärten dieser Komponenten bewirkt wird diese Aufgabe dadurch gelöst, dass bei Vorliegen einer zweiten Komponente aus der Klasse der Aminoplaste die Trägerschicht als eine Zellstoff, Zellwolle und Polyester enthaltende Faserwirrlage ausgeführt ist.

Bevorzugte Ausführungsformen der Erfindung sind Gegenstand der Unteransprüche.

Bei dem erfindungsgemäßen Komponentenklebersystem wird durch das Merkmal, dass bei Vorliegen einer zweiten Komponente aus der Klasse der Aminoplaste die Trägerschicht als eine Zellstoff, Zellwolle und Polyester enthaltende Faserwirrlage ausgeführt ist, erreicht, dass ein Komponentenkleber mit unterschiedlichst vorher bestimmbaren Eigenschaften geschaffen ist. So ist beispielsweise die Dicke der Trägerschicht für unterschiedliche Teile zu verklebender Materialflächen so wählbar, dass beispielsweise Oberflächenkrümmungen erzeugenden Oberflächenspannungen zwischen jeweils zwei miteinander verbundenen Flächen ausgeglichen werden und sogar gezielt so gesteuert werden können, dass nach einem Aushärten des Klebeproduktes dieses eine zumindest ansatzweise vorgebbare bestimmte Krümmung aufweist.

Gemäß einer ersten bevorzugten Ausführungsform der erfindungsgemäßen Vorrichtung ist vorgesehen, dass das Aminoplast ein Harnstoffformaldehydharz ist.

Gemäß einer anderen bevorzugten Ausführungsform der erfindungsgemäßen Vorrichtung ist vorgesehen, dass die Faserwirrlage Zellstoff, Zellwolle und Polyester enthält und dabei von einem Acrylatbinder verfestigt ist. Alternativ kann die Zellstoff, Zellwolle und Polyester enthaltende Faserwirrlage auch von einem Dispersionsbinder verfestigt sein, wobei der Dispersionsbinder vorzugsweise generell von einem Polyvinylacetat gebildet ist.

Die erfindungsgemäße Faserwirrlage, die vorzugsweise einen Formaldehydfänger enthält, weist gemäß bevorzugter Ausführungsformen eine Dicke von 0,1 mm bis 0,4 mm [Millimeter] auf, um eine Wirkung entsprechend der Lösung der Aufgabe zu erzielen. Die Faserwirrlage weist dabei ebenfalls vorzugsweise ein Flächengewicht von 20 g/m² bis 50 g/m² [Gramm pro Quadratmeter] auf, und hat vorzugsweise eine Luftdurchlässigkeit von 1800 1 Luft/ m² x s bis 2300 1 Luft/ m² x s [Liter Luft pro Quadratmeter pro Sekunde]. Eine Wasser-Benetzungszeit ist dabei typischerweise auf im Bereich von 0,5 s bis 3 s [Sekunden] bemessen.

Bei der erfindungsgemäßen Trägerschicht ist die in die Trägerschicht eingebrachte Komponente ein trockenes Pulver.

Das erfindungsgemäße Komponentenklebersystem wird im folgenden anhand einer bevorzugten Ausführungsform erläutert, die in den Figuren der Zeichnung dargestellt ist. Darin zeigen:
- Fig.1: eine bevorzugte Ausführungsform einer Träger-Schicht des erfindungsgemäßen Komponentenklebersystems in einer Ansicht von oben;
- Fig.2: die in Figur 1 dargestellte Ausführungsform einer Träger-Schicht in einer Seitenansicht;
- Fig.3: die in den Figuren 1 und 2 dargestellte Ausführungsform einer Träger-Schicht des erfindungsgemäßen Komponentenklebersystems, eingebracht in eine Mehrschichten Holzplatte in einer Seitenansicht.

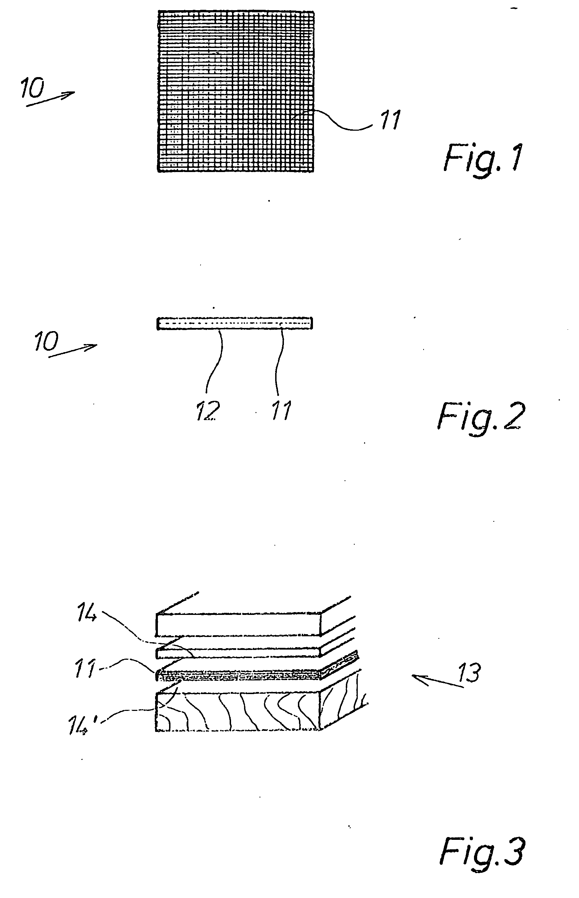

Die in den Figuren 1 und 2 dargestellte Ausführungsform einer Trägerschicht 10 ist erfindungsgemäβ für eine Komponentenklebersystem vorgesehen, das zwei Komponenten enthält, von denen eine feste Komponente 11 bei Kontakt mit der anderen flüssigen Komponente ein Aushärten dieser flüssigen Komponente bewirkt, wobei erfindungswesentlich die feste Komponente 11 in die Trägerschicht 10 eingelagert ist und die Trägerschicht 10 aus einem festen, feuchtigkeitsaufnahmefähigen, hydrophilen saugfähigem Material hergestellt ist. Aufgrund der hydrophilen Eigenschaften der festen Trägerschicht 10 ist dabei sichergestellt, dass nach einem Kontaktieren der flüssigen Komponente mit der Trägerschicht 10 bzw. mit dem in der Trägerschicht 10 gelagerten festen Komponente 11 eine homogene Durchmischung der beiden Komponenten ohne einen herkömmlicherweise notwendigen mechanischen Durchmischungsvorgang stattfindet.

Bei der in Figur 3 dargestellten Ausführungsform des Komponentenklebersystems ist die Trägerschicht 10 in eine Mehrschichten Holzplatte 13 eingebracht, wobei hier die Trägerschicht 10 aus einem Vliesmaterial hergestellt ist, und wobei bei der Herstellung der Trägerschicht 10 die in die Trägerschicht 10 eingebrachte Komponente 11 nach einem Auftragen in flüssiger Form getrocknet war. Die in die Trägerschicht 10 eingebrachte Komponente war dabei ein Salz, das im Zuge der Fertigstellung der Mehrschichten-Holzplatte 13 mit einem auf beide Oberflächen der Trägerschicht 10 aufgetragenen flüssigen Komponente eine chemische Reaktion eingegangen ist um die erfindungsgemäße Schicht aus Komponentenkleber zu bilden. Alternativ hätte bei der Fertigstellung der Mehrschichten-Holzplatte 13 die Möglichkeit bestanden, die flüssige Komponente auf die mittels des erfindungsgemäßen Komponentenklebers verklebten Oberflächen 14, 14' aufzutragen.

Bei der erfindungsgemäßen Trägerschicht 10 ist als eine Zellstoff, Zellwolle und Polyester enthaltende Faserwirrlage ausgeführt, wobei die zweite flüssige Komponente aus der Klasse der Aminoplaste gewählt ist. Das Aminoplast ist dabei ein Harnstoffformaldehydharz. Die Faserwirrlage 10 ist von einem Acrylatbinder verfestigt und enthält einen Formaldehydfänger.

Die Faserwirrlage weist eine Dicke von 0,2 mm auf und hat dabei ein Flächengewicht von 25 g/m² und eine Luftdurchlässigkeit 2100 l Luft/ m² x s, wobei die Faserwirrlage eine Wasser-Benetzungszeit 2 s aufweist.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Komponentenklebersystem umfassend eine feste Trägerschicht aus saugfähigem Material für einen Komponentenkleber mit mindestens einer ersten pulverförmigen Komponente, die in die Trägerschicht eingebracht ist, und einer zweiten flüssigen Komponente, wobei die erste Komponente bei Kontakt mit der zweiten flüssigen Komponente ein Aushärten dieser Komponenten bewirkt, **dadurch gekennzeichnet, dass** bei Vorliegen einer zweiten Komponente aus der Klasse der Aminoplaste die Trägerschicht als eine Zellstoff, Zellwolle und Polyester enthaltende Faserwirrlage ausgeführt ist.

2. Komponentenklebersystem nach Anspruch 1, **dadurch gekennzeichnet, dass** das Aminoplast ein Harnstoffformaldehydharz ist.

3. Komponentenklebersystem nach Anspruch 1, **dadurch gekennzeichnet, dass** die Zellstoff, Zellwolle und Polyester enthaltende Faserwirrlage von einem Acrylatbinder verfestigt ist.

4. Komponentenklebersystem nach Anspruch 1, **dadurch gekennzeichnet, dass** die Zellstoff, Zellwolle und Polyester enthaltende Faserwirrlage von einem Dispersionsbinder verfestigt ist.

5. Komponentenklebersystem nach Anspruch 4, **dadurch gekennzeichnet, dass** der Dispersionsbinder von einem Polyvinylacetat gebildet ist.

6. Komponentenklebersystem nach einem der vorhergehenden Ansprüche, **dadurch gekennzeichnet, dass** die Faserwirrlage einen Formaldehydfänger enthält.

7. Komponentenklebersystem nach einem der vorhergehenden Ansprüche, **dadurch gekennzeichnet, dass** die Faserwirrlage eine Dicke von 0,1 mm bis 0,4 mm aufweist.

8. Komponentenklebersystem nach einem der vorhergehenden Ansprüche, **dadurch gekennzeichnet, dass** die Faserwirrlage ein Flächengewicht von 20 g/m² bis 50 g/m² aufweist.

9. Komponentenklebersystem nach einem der vorhergehenden Ansprüche, **dadurch gekennzeichnet, dass** die Faserwirrlage eine Luftdurchlässigkeit 1800 l Luft/ m² x s bis 2300 l Luft/ m² x s aufweist.

10. Komponentenklebersystem nach einem der vorhergehenden Ansprüche, **dadurch gekennzeichnet, dass** die Faserwirrlage eine Wasser-Benetzungszeit 0,5 s bis 3 s aufweist.

11. Komponentenklebersystem nach einem der Ansprüche 1 bis 10, **dadurch gekennzeichnet, dass** die in die Trägerschicht eingebrachte Komponente trocken ist.

## Claims

1. A mixed-adhesive system comprising a solid carrier layer of absorbent material for a mixed adhesive having at least one first pulverulent component incorporated in the carrier layer, and a second, liquid component, which first component causes, on contacting the second liquid component, curing of the latter, **characterized in that** the said second component is selected from the class consisting of aminoplasts and the carrier layer is a random fibrous web comprising chemical pulp, viscose staple fibres, and polyester.

2. The mixed-adhesive system according to claim 1, **characterized in that** said aminoplast is a ureaformaldehyde resin.

3. The mixed-adhesive system according to claim 1, **characterized in that** said random fibrous web comprising chemical pulp, viscose staple fibres, and polyester is consolidated by an acrylate binder.

4. The mixed-adhesive system according to claim 1, **characterized in that** said random fibrous web comprising chemical pulp, viscose staple fiber, and polyester is consolidated by a dispersion binder.

5. The mixed-adhesive system according to claim 4, **characterized in that** said dispersion binder is a polyvinyl acetate.

6. The mixed-adhesive system according to any one of the previous claims, **characterized in that** said random fibrous web contains a formaldehyde scavenger.

7. The mixed-adhesive system according to any one of the previous claims, **characterized in that** said random fibrous web has a thickness of from 0.1 mm to 0.4 mm.

8. The mixed-adhesive system according to any one of the previous claims, **characterized in that** said random fibrous web has a weight per unit area of from 20 g/m² to 50 g/m².

9. The mixed-adhesive system according to any one of the previous claims, **characterized in that** said random fibrous web has an air permeability of from 1800 L air/m² x s to 2300 L air/m² x s.

10. The mixed-adhesive system according to any one of the previous claims, **characterized in that** said random fibrous web has a water-wetting time of from 0.5 s to 3 s.

11. The mixed-adhesive system according to any one of claims 1 to 10, **characterized in that** the component introduced into said carrier layer is dry.

## Revendications

1. Système de colle à composants comprenant une couche support ferme en matériau absorbant pour une colle à composants comportant au moins un premier composant pulvérulent qui est inséré dans la couche support, et un autre composant fluide, le premier composant provoquant un durcissement de ces composants par contact avec le deuxième composant fluide,
**caractérisé par le fait que**, en présence d'un deuxième composant de la catégorie des aminoplastes, la couche support est réalisée sous forme de couche de fibres emmêlées comportant de la cellulose, de la fibranne et du polyester.

2. Système de colle à composants selon la revendication 1, **caractérisé par le fait que** l'aminoplaste est une résine urée-formaldéhyde.

3. Système de colle à composants selon la revendication 1, **caractérisé par le fait que** la couche support comportant de la cellulose, de la fibranne et du polyester est consolidée par un capteur de formaldéhyde.

4. Système de colle à composants selon la revendication 1, **caractérisé par le fait que** la couche support comportant de la cellulose, de la fibranne et du polyester est consolidée par un liant à dispersion.

5. Système de colle à composants selon la revendication 4, **caractérisé par le fait que** le liant à dispersion est constitué par un acétate de polyvinyle.

6. Système de colle à composants selon l'une des revendications précédentes,
**caractérisé par le fait que** couche de fibres emmêlées contient un capteur de formaldéhyde.

7. Système de colle à composants selon l'une des revendications précédentes,
**caractérisé par le fait que** la couche de fibres emmêlées présente une épaisseur située entre 0,1 mm et 0,4 mm.

8. Système de colle à composants selon l'une des revendications précédentes, **caractérisé par le fait que** la couche de fibres emmêlées présente un poids superficiel situé entre 20 g/m² et 50 g/m².

9. Système de colle à composants selon l'une des revendications précédentes, **caractérisé par le fait que** la couche de fibres emmêlées présente une perméabilité à l'air située entre 1800 1 d'air / m² x s et 2300 l d'air / m² x s.

10. Système de colle à composants selon l'une des revendications précédentes, **caractérisé par le fait que** la couche de fibres emmêlées présente un temps d'humectage par eau situé entre 0,5 s et 3 s.

11. Système de colle à composants selon l'une des revendications de 1 à 10, **caractérisé par le fait que** le composant inséré dans la couche support est sec.
